Europäisches Patentamt

**European Patent Office**

Office européen des brevets

(19)

(11) Publication number: **0 122 733**
A2

(12)      # EUROPEAN PATENT APPLICATION

(21) Application number: **84301859.9**

(22) Date of filing: **19.03.84**

(51) Int. Cl.³: **B 01 D 15/08**

(30) Priority: **17.03.83 JP 45229/83**

(43) Date of publication of application:
**24.10.84 Bulletin 84/43**

(84) Designated Contracting States:
**CH DE FR GB LI NL SE**

(71) Applicant: **KOKEN CO. LTD.**
**5-18 Shimoochiai 3-chome**
**Shinjuku-ku Tokyo(JP)**

(72) Inventor: **Kawasaki, Tsutomu**
**6-31-17 Seijyo**
**Setagaya-ku- Tokyo(JP)**

(74) Representative: **Bass, John Henton et al,**
**REDDIE & GROSE 16 Theobalds Road**
**London WC1X 8PL(GB)**

(54) Chromatographic method and system therefor.

(57) The present invention has been completed to overcome the limitation of the chromatographic separation capacity achieved by HPLC methods, which have recently been developed and are attracting attention, by applying a totally different and novel principle thereto. It provides a chromatographic method, in which at least two pumps are interposed respectively at both ends of one chromatographic column selected from a plurality of chromatographic columns or at both ends of and/or at one or more points along a group of at least two columns selected from the plurality of chromatographic columns and connected together, and are operated, as well as a system suitable for use in the practice of the chromatographic method.

./...

EP 0 122 733 A2

FIG.1

CHROMATOGRAPHIC METHOD
AND SYSTEM THEREFOR.

This invention relates to a chromatographic method
and a system therefor, and particularly to a chromatographic
method materializing high separation capacity and a system
therefor.

Liquid chromatography has been finding favored
utility in recent years as a method for separating multicomponent samples. The principle of this liquid chromatography
resides in that a sample dissolved in a solvent is caused
to flow in a prescribed direction through interstices defined
by stationary supports. In the course of its flow, the sample
is allowed to undergo repeated and frequent phase transition
between an immobile state occurred due to the capture of the
sample by the supports (a stationary phase) and a free-moving
state permitting the sample to move freely as a solute of
the solution without being caught by the supports (a moving
phase). As a result, a component is allowed to move faster
along the flow as the component stays longer in the moving
phase. This mobility is governed by properties inherent to
each component. Accordingly, components are separated from
one another depending on differences in mobility. In some
instances, separation of certain components may be caused
by their interaction.

Stationary supports may be divided into two groups, namely, one being liquid stationary supports and the other
solid stationary supports.  In the former stationary supports,
the sample in each stationary phase is in the form of a solute
similar to the same sample in each moving phase.  In the
case of the latter stationary supports, each sample is fixed
on or in a stationary solid.  An intermediary situation may
be found when a sample is allowed to dissolve in a liquid
which has been caught and fixed in pores or the like formed
in a solid.  As mechanisms for fixing a sample on a solid,
may be mentioned (a) the fixing mechanism through the one
energetic interaction between the sample and solid (i.e.,
adsorption in broad sense) and (b) the fixing mechanism in
which the sample is merely and physically hooked and fixed on
network structures or in pores of the solid.

In a column-chromatographic method, stationary
supports are packed in a column and a sample is caused to
flow from one end (inlet) to the other end (outlet).  Besides,
there are thin-layer chromatographic method making use of
supports put together into a thin plate and paper chromatographic method employing internal bound water of a sheet of
paper as stationary supports.

It is the most important subject to improve the
separation capacity in liquid column chromatography.  In this
field of art, a chromatographic method having relatively high
separation capacity has been developed recently, which is
called "high-performance liquid chromatography" (abbreviation:

HPLC). As principal column-packing materials

may for example be mentioned silica gel, chemically-bonded silica, ion-exchange resins, etc. Whichever packing material is used, a sample is allowed to penetrate to the interior of the packing material which is a stationary solid and is then fixed there. Here, the osmosis of sample molecules from the surface of the packing material to its interior and its movement from the interior to the surface (namely, reverse osmosis) take place owing to free diffusion of the sample molecules. The osmosis and reverse osmosis take definite periods of time correspondingly. Let's now assume that the average between a time period required for osmosis and that necessary for reverse osmosis be $t$ and the time required for an intracolumn moving phase to move over a unit length along the flow in the direction of the axis of a column be $t'$. According to the chromatography theory [J.C. Giddings, Dynamics of Chromatography: Part I, Principles and Theory, Dekker, New York, 1965], it is known that the separation capacity of a column increases as the ratio of $t$ to $t'$ ($t/t'$) decreases. There are two approaches for making the ratio $t/t'$ smaller. The first approach is to lower the flow velocity for making $t'$ larger and to conduct chromatography at a low velocity over a significantly long period of time. The second approach is to reduce the grain size of the packing material so as to make $t$ smaller.

A technique has been developed to produce a packing material· having a smaller grain size for use in HPLC,
whereby materializing a chromatographic method which can
achieve a certain high level of separation. However, use
of such a packing material is unsuitable for actual applications because intergranular spacings become unavoidably
narrower and the flow .velocity is reduced to a considerable
extent when a column is packed with the packing material
having such a small grain size. With a view toward overcoming
these difficulties, high-pressure pumps and columns capable
of withstanding high pressures have been developed. A
considerably high pressure is applied to the inlet of a column
by means of such a high-pressure pump (HPLC is also called
high-speed chromatography in order to emphasize this method).
However, the above method requires a great deal of expense.
In addition, the above method imposes a limitation to the
overall length of each column so as to reduce the overall
dynamic resistance against a flow which occurs between the
inlet and outlet of the column. Due to this limitation, the
overall lengths of commercially-available ordinary HPLC columns
are limited to several tens centimeters or shorter. Besides,
HPLC is accompanied by a fatal defect that samples, to which
HPLC may be applied, are limited to lower molecules having
molecular weights of about $1 \times 10^{3}$ daltons or lower. This
limitation is attributed to the fact that the molecular
diffusion coefficient decreases as the molecular weight goes
up and the value $t$ is hence increased significantly despite the reduced grain size of the packing material.

However, there have been two conventional methods which are capable of achieving separation of such a level as obtained by HPLC with respect to samples having molecular weights of about $1 \times 10^4$ daltons or higher. The first method is to carry out chromatography at a considerably low speed so as to increase t'. The second method is to use, as a packing material to be packed in columns, an inorganic crystalline solid represented by hydroxyapatite (a sort of calcium phosphate, having a chemical composition of $Ca_5(PO_4)_3OH$; hereinafter abbreviated as "HA"). In this case, each sample is adsorbed and fixed on the surface of the inorganic crystalline solid and is not allowed to penetrate to the interiors of the crystals. Therefore, the value $\underline{t}$ is infinitely small from the practical viewpoint and the value t/t' is hence believed to be infinitely small. This assumption has been proven from a fact found through experiments, namely, a fact that the chromatographic separation does not show any change by variations in flow velocity in HA chromatography. This is a clear contrast from the phenomenon seen in the case of general chromatography in which osmosis takes place into stationary supports, in other words, the phenomenon that the separation capacity increases as the flow velocity drops. As a matter of fact, it has been known that biopolymers (proteins, nucleic acids, etc.) and virus having molecular weight in the range of about $1 \times 10^4$ - about $1 \times 10^8$ daltons

are adsorbed on the surfaces of HA crystals and obtain.
relatively good chromatographic separations at high speeds
[G. Bernardi, Methods Enzymol ., 21, 95(1971); 22, 325(1971);
27, 471(1973)]. With some exceptions, HA crystals can however
adsorb molecules having molecular weights of $1 \times 10^3$ daltons
or lower to very little extents and are generally improper for
the separation of a mixture of samples having low molecular
weights.

In order to achieve for samples having molecular
weights of about $1 \times 10^4$ or higher the same level of separation
as that obtained by HPLC of lower molecules having molecular
weights of about $1 \times 10^3$ daltons or smaller under the above-
mentioned circumstances, it is necessary either (a) to conduct
chromatography at a considerably low speed or (b) to use
such adsorptive inorganic crystals as HA as a column-packing
material instead of conducting chromatography at a low speed.
However, it is actually seldom to achieve any satisfactory
level of chromatographic separation, which is high enough
to meet objectives, whichever method is followed. This is
a distinct contrast from the fact that intended levels of
separation are often achieved by HPLC with respect to lower
molecules having molecular weights of about $1 \times 10^3$ daltons
or lower. This seems to be attributed to the following two
reasons. Namely, the chromatographic separation between
two types of molecules, which are similar to each other, is
generally governed, practically speaking, by differences in intensive properties between these two types of molecules rather than differences in extensive properties between such two types of molecules. Let's now compare, by way of example, the chromatographic separation between two types of molecules which are respectively made of 10 atoms among which 9 atoms are common but 1 atom is different and the chromatographic separation between two types of molecules which are respectively made of 100 atoms among which 99 atoms are common but 1 atom is different. The former separation is generally easier than the latter one. This can be attributed to the fact that the chromatographic separation is not directly governed by the total number of atoms which are not common to the two types of molecules (in each of the above-given two examples, the total number is 1), in other words, by differences in extensive properties between the two types of molecules but controlled by a value obtained dividing the total number of atoms not common to the molecules with the total number of atoms contained in a single piece of molecule (which value is 1/10 in the former example and 1/100 in the latter example), namely, by differences in intensive properties between the two types of molecules. Generally speaking, minimum differences in intensive properties which may occur in a mixture of lower molecules are greater than differences which may arise in the intensive properties of a mixture of higher molecules. This is the reason why HPLC, one of prior art techniques, can achieve sufficiently-high levels of chromato- separation fulfilling actual objectives in the case of lower molecules. This is the reason why no effort has been actually made to uncover an absolutely novel principle for the separation of a mixture of lower molecules and, based on the novel principle, to improve the separation capacity further.

Actually speaking, the minimum differences in intensive properties between or among molecules are reduced significantly as the molecular weights of the molecules in a sample mixture increase. There has not been any conventional method capable of achieving a sufficiently-high chromatographic separation with respect to a sample mixture containing molecules having molecular weight of at least $1 \times 10^4$ daltons or so, thereby failing to fulfill the intended goal. In order to reach the intended goal, it becomes necessary to find out a novel principle completely different from HPLC so that the chromatographic separation capacity can be improved to a significant extent on the basis of the novel principle. This improvement has been made in the present invention. Compared with the present invention, all chromatographic techniques existed prior to the completion of the improvement are considered to be prior art techniques. Although HPLC, one of such prior art techniques, is said to achieve a variety of sufficiently-high levels of separations in the case of lower molecules and is hence said to meet actual objectives, HPLC cannot obviously achieve complete separations in some instances. This drawback of HPLC has been solved by the method of this invention.

As has been mentioned above, the method of achieving a high level of chromatographic separation in accordance with this invention is totally different from the HPLC method and is a method developed on the basis of the totally independent and novel principle. Namely, the chromatographic method of this invention has found its basis on the extremely general chromatographic principle. Accordingly, the present invention may be applied to such prior art techniques as not only the HPLC method and the aforementioned liquid column chromatography having similar separation capacity to the HPLC method and applicable to high molecular weight samples but also all other chromatographic methods including liquid chromatography other than column chromatography and gas chromatography so that the prior art techniques may be improved by the method of this invention.

An object of this invention is to provide a method and system, which are simple to operate for analysis and are capable of analyzing and separating samples without need for expensive packing material or apparatus. Especially, methods of this invention can surpass the limitations of chromatographic separation capacities achieved by conventional methods developed in HPLC, owing to the introduction of the absolutely different and novel principle. The invention permits separation of high molecular weight mixtures on the basis of differences in minute structure (more specifically, small differences in intensive properties), although such separation was not feasible by any of the methods derived from HPLC.

Another object of this invention is to provide a generic method which can materialize a high level of separation capacity in every field of chromatography.

When silica gel, chemically-bonded silica, an ion-exchange resin or the like is used as a column-packing material in liquid column chromatography of such a type that a sample fixed on (or in) stationary supports serves as a stationary phase as mentoined above, the osmosis phenomenon takes place in the phase transition between the moving phase and stationary phase.and the chromatographic mechanism is thus complex. In the case of HA chromatography on the other hand, HA which is adsorptive supports is inorganic crystals having a hard and regular stereoscopic structure. X-ray structural analyses have hence been carried out in detail on HA. Moreover, the adsorption takes place absolutely on the surfaces of adsorptive supports (HA crystalline-soild). There have been accumulated experimental data which indicate inter alia which functional groups of solutes (primarily biopolymers such as proteins, nucleic acid and the like as well as virus) are bonded in what manner on which structural units in the surfaces of crystals. For this reason, HA chromatography may be considered as an idealized model for other chromatographic methods. Under these circumstances, a quantitative experiment was carried out in accordance with the commonly-employed linear ionic concentration gradient elution method so as to determine precisely the relationship between the separation capacity of an HA column and chromatographic conditions.  On the other hand, theoretical studies on HA chromatography were started on the basis of an extremely-

general, unique chromatography theory which served as a basis for all chromatographic methods, which theoretical studies have been followed by many subsequent studies over somewhat more than 10 years.  The relationship between separation capacity of columns and experiment conditions of chromatography in the case of the linear ionic concentration gradient elution method was the subject of a great deal of work.  The resulting theoretical conclusion for the relationship was proven by quantitative experiments.  Accordingly, it has now become

feasible to find out a certain property of a sample mixture by chromatography and to determine experimental conditions materializing chromatographic experiments of high separation capacity and suitable for the mixture, whereby achieving high degrees of separation.  The above findings which have stemmed from the extremely general theory are believed to apply equally to chromatographic methods other than HA chromatography provided that certain modifications or adjustments are applied thereto.

The following findings can be applied, except for those pertaining to ionic concentration gradient elution, equally to ordinary chromatographic methods which do not rely upon the ionic concentration gradient elution method.

The separation capacity of a column in HA chromatography making use of the linear ionic concentration gradient elution method is principally governed by two experimental conditions, namely, by the overall length of the column and the gradient, i.e., inclination of ionic concentration. With some exceptions, the separation capacity of a column increases as the gradient, i.e., inclination of the ionic concentration becomes smaller. However, it is necessary to make the overall column length longer as the gradient becomes smaller. This increment in the overall column length is largely correlated with the size of a sample molecule. A longer column is required as the molecular size becomes smaller. Hence, an extremely long column is indispensable where the molecular size is particularly small. As a specific example, let us now suppose that the gradient of ionic concentration be $3.5 \times 10^{-5}$ M/cm. Namely, this gradient is milder by 10 to 100 times or so compared with conventionally-employed inclinations [ G. Bernardi, Methods Enzymol., 21, 95 (1971); 22, 325 (1971); 27, 471 (1973)]. If such a gradient of ionic concentration is used, an overall column length of 250 cm or so is required for a mixture of molecules having such sizes as lysozyme or the like (molecular weight: about $1.5 \times 10^{4}$ daltons). On the other hand, an overall column length of about 50 cm or so may be sufficient where the chromatography is applied to collagen having a large molecular weight (about $3 \times 10^{5}$ daltons). In the case of DNA which has a large effective molecular size (molecular weight:
about 1 x 10$^6$ - 1 x 10$^7$ daltons), it is suitable to use a
column having an overall length of about 2.5 cm or so.
The above experimental conditions are required to achieve
separation capacity considerably higher than those available
from the practice of conventional methods.  In order to
enhance the separation capacity further, it becomes necessary
to lower the gradient of ionic concentration and to
increase the overall column length.  When subjecting a mixture
consisting of molecules having a variety of sizes to
chromatography, the experimental conditions are somewhat
more complex.  It is however still possible to theoretically
predict optimum experimental conditions.

　　　　With the foregoing in view, it is desirable that it is feasible to
adjust the overall column length to considerable extents
as desired, particularly, to increase the overall column
length infinitely.  In addition, it is desirable to use a
column fixed strictly upright in order to make the flow
velocity as uniform as possible in each cross-sectional plane
of the column and hence to maintain the separation capacity
of the column at the possible maximum level.  This verticality
becomes more important particularly as the overall column
length increases.  Furthermore, it is also required to provide
one or more pumps of certain type as a power source for
conducting chromatography at a suitable high flow velocity.
If one wants to increase the overall column length infinitely, it becomes first of all difficult to adjust the overall column length as desired when the chromatography is carried out by using a single piece of column. Secondly, the dynamic resistance increases against the flow of a fluid along the entire length of the column as the overall column length increases. Thus, a significantly powerful pump is required for causing the fluid at a suitable high flow velocity. Where the overall column length exceeds a certain limitation, it is practically impossible to provide such a pump. Therefore, it is necessary to contrive some means for overcoming these two difficulties.

According to the invention there is provided a chromatographic method, which comprises interposing at least two pumps respectively at each end of one chromatographic column selected from a plurality of chromatographic columns, or at each end of a group of at least two chromatographic columns selected from the plurality of chromatographic columns and connected to each other, and/or at one or more locations along the thus-connected at least two chromatographic columns, and operating these pumps.

There is further provided a chromatographic system comprising :

a plurality of chromatographic columns; and

at least two pumps interposed operably and respectively at each end of one chromatographic column selected from the plurality of chromatographic columns, or at each end of a group of at least two chromatographic columns selected from the plurality of chromatographic columns and connected to each other, and/or at one or more locations along the thus-connected at least two chromatographic columns.

The columns may be held in mutually-parallel relationship in a holding member. The lengths of the columns need not be equal to one another. In preferred embodiments, the column having the shortest length is extremely short (for example, has an effective length of several millimeters or less), whereas the column having the longest length is of such a length as required to keep the overall dynamic resistance to the flow, which is to be produced between the injection port of the column for a fluid and the eluate collection port of the same column, at a sufficiently lower level (for instance, has an effective length of 50 cm). Desired n pieces of columns are selected from the plurality of columns so as to adjust the overall column length at will. Since preferred systems include some short columns, it is feasible to change the overall column length substantially in a
continuous fashion by adding a suitable number of such short
columns to the aforementioned n pieces of columns. Where
n ≥ 2, the n pieces of columns are connected in series via
n-1 pieces of small-diametered tubes. The resulting group
of columns, which have been connected in series, is then preferably
provided with two additional small-diametered tubes respectively
at both free ends of the two columns positioned respectively
at both ends of the column group. The additional small-
diametered tubes serve respectively as a fluid injection port
and eluate collection port for the overall group of columns
connected in series. Where n = 1, namely, a desired single
piece of column is chosen from the plurality of columns,
small-diametered tubes are preferably provided at each end
of the column to form a fluid injection port and eluate collection
port respectively. It is possible to increase the overall
column length infinitely when a plurality of systems, each
of which systems has been constructed by connecting a plurality
of columns in series, are connected by means of additional
small-diametered tubes.

When two or more pumps are applied to two or more
locations on desired small-diametered tubes in a group of
columns connected in series and are operated synchronously
so as to produce a flow with a suitable number of pumps
interposed therebetween, this permits to produce a flow
which is balanced far better than that available when a single piece of pump is provided at one end of the group of columns. If the number of pumps is increased as the number of columns $n$ becomes greater, the increased overall dynamic resistance to the fluid can be suitably compensated and the chromatography can be carried out at a suitable high speed no matter how long the overall column length is and how the overall dynamic resistance to the flow increases. Especially where the number $n$ of columns selected from a plurality of columns in a system according to this invention is smaller than the number $N$ of pumps equipped with the system, it is possible to permit the pumps to act on all the $(n + 1)$ pieces of small-diametered tubes furnished with the thus-selected group of columns connected in series (out of which tubes, the $(n - 1)$ pieces of the tubes serve to connect the $n$ pieces of the columns and the remaining two tubes have been additionally and respectively provided at both ends of the column group). In this case, pumps are provided at both ends of each of the columns which constitute a flow path, whereby producing a highly-balanced flow. As a pump unit, there has been adopted the so-called multi-channel peristaltic pump system equipped with a plurality ($N$ pieces) of pumps which can be operated synchronously by means of a single unit of motor. In the pump system, small-diametered tubes which extend through their corresponding pumps are squeezed by the pumps, thereby causing a flow to occur in accordance with a mechanism similar to the peristalsis of intestines.

The diffusion along the axis of each column, which is one of causes for lowering the separation capacity of the column, is induced generally by three causes. The first cause is that the ratio of time $t$ required for the mutual transition between mobile phases and stationary phases (which time may for example be the time required for a sample molecule to move through the column-packing material in the case of HPLC) to time $t'$ required for a moving phase to move over a unit length along the flow in the direction of the axis of the column (i.e., $t/t'$) is great. The second cause is a variation in flow velocity which variation occurs unavoidably in a cross-sectional plane of the column due to the non-uniformity of interstices defined between or among grains of the packing material in the column, and the influence of the inner wall of the column, etc. The third cause is thermal Brownian movement. The first cause does not exist inherently in such a special case as using adsorptive inorganic crystals such as the aforementioned HA as a column-packing material. In more general cases, it is feasible to substantially remove the first cause by reducing the grain size of a column-packing material so as to make the value $t$ smaller or lowering the flow velocity so that the value $t'$ may be increased.

The influence of the diffusion in the direction of a column axis, which diffusion has been induced by the third cause, is inherently and extremely small, generally speaking, and may thus be completely ignored compared with the influences of the first and second causes. If the overall length and volume of small-diametered tubes attached to a group of columns connected in series are at least equal to or less than the overall length and volume of the columns, diffusion of molecules caused by their thermal Brownian movement which takes place in the small-diametered tubes is believed to cause such a little reduction in chromatographic separation capacity that can thus be ignored. So long as the ratio of the cross-sectional area of each small-diametered tube to the cross-sectional area of its corresponding column (i.e., the cross-sectional area of the small-diametered tube/ the cross-sectional area of the column) is chosen to fall within the range of from $1 \times 10^{-4}$ to 1, it is possible to make the influence of diffusion, which occurs as a result that the flow of a solution is affected by the inner wall of each small-diametered tube due to the viscosity of the solution and the like, far smaller compared with the influences given by the first and second causes.

It is desirable to fix each column precisely upright in order to keep the influence of diffusion in the direction

of each column axis by the second cause at the possible minimum level. Requirement for this verticality becomes stricter as the overall column length increases. In order to assure that all columns of a system be fixed upright, all the columns in a holding member are fixed in advance parallelly to one another and parallelly to a part of the holding member. The position of the holding member is adjusted by fine adjustment means and is fixed, thereby fixing all the columns precisely upright. The verticality of the columns can be readily confirmed by means of a pendulum or level provided with a part of the holding member, which part is parallel to the columns. The verticality of the columns has been designed to remain very stably by mounting a heavy pump unit on the holding member.

The present invention may be practiced most ideally in liquid column chromatography of such a type that a sample fixed on stationary supports (or in stationary supports) is used as a fixed phase. This invention has been completed on the basis of studies on HA chromatography whose theoretical analysis is easy, and provides a chromatographic method having high separation capacity and a system suitable for use in the practice of the method. The method and system of this invention have been based on a novel principale which is totally different from any method and system in HPLC. Therefore, the method and system of this invention can be applied equally to HPLC methods and systems. Furthermore, the method and system of this invention enable to separate a mixture of molecules having high molecular weights on the basis of differences in their microstructures, although separation of such a mixture was not achieved at all by HPLC.

The principle, which serves as a basis for the method and system of this invention, has been established on the basis of an extremely general and unique theory which constitutes a theoretical basis for all types of chromatography. Accordingly, this invention provides a method and system which can materialize high separation capacity in all fields of chromatography (in which field, there are included not only liquid chromatography but also gas chromatography).

It may in some instances be more convenient to use, instead of the so-called pump unit or system, high pressure gas cylinders capable of serving in much the same way as the unit or system particularly when the present invention is applied to gas chromatography. In this sense, the term "pumps" should be interpreted with such enlarged significance that it means "any types of devices or apparatus which produce power to form a flow through columns". In addition, this invention may be applied equally to chromatographic methods other than column chromatography (for example, thin-layer chromatography, paper chromatography, etc.). Therefore, the term "column" or "columns" should be expanded in meaning so that it may be interpreted to embrance "all types of structure or device adapted to support stationary supports". It is not absolutely necessary to connect a plurality of chromatographic columns by interposing small-diametered tubes. It is feasible to connect columns directly to one another and to provide pumps at their joints.

The invention will now be further described by way of example, with reference to the drawings, in which:

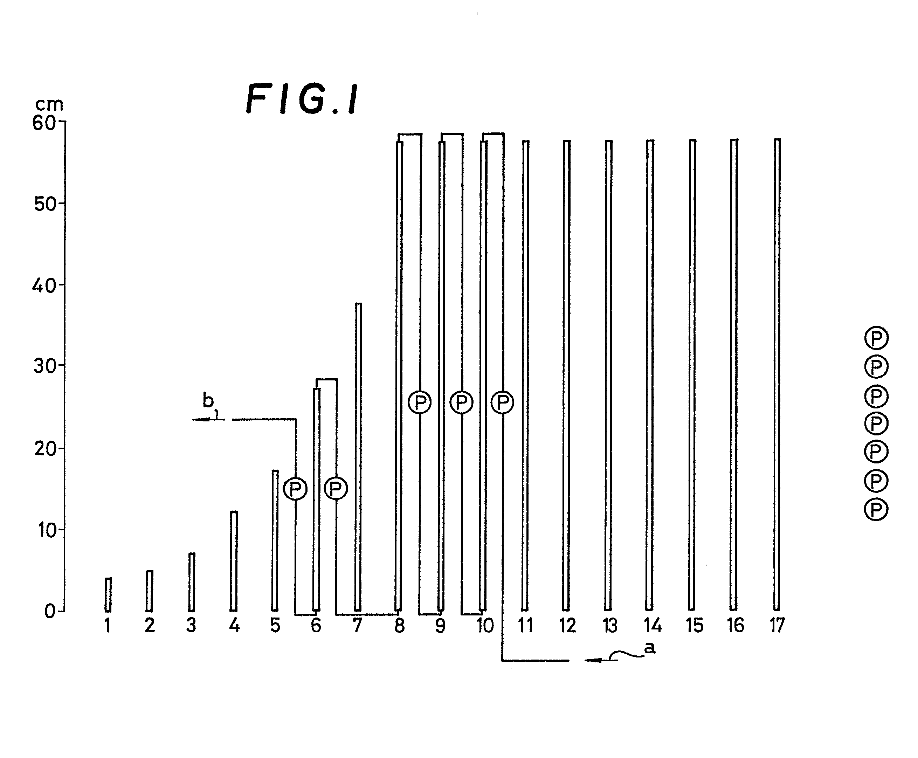

Fig. 1 is a schematic illustration showing the outlines of a system of this invention and its application method;

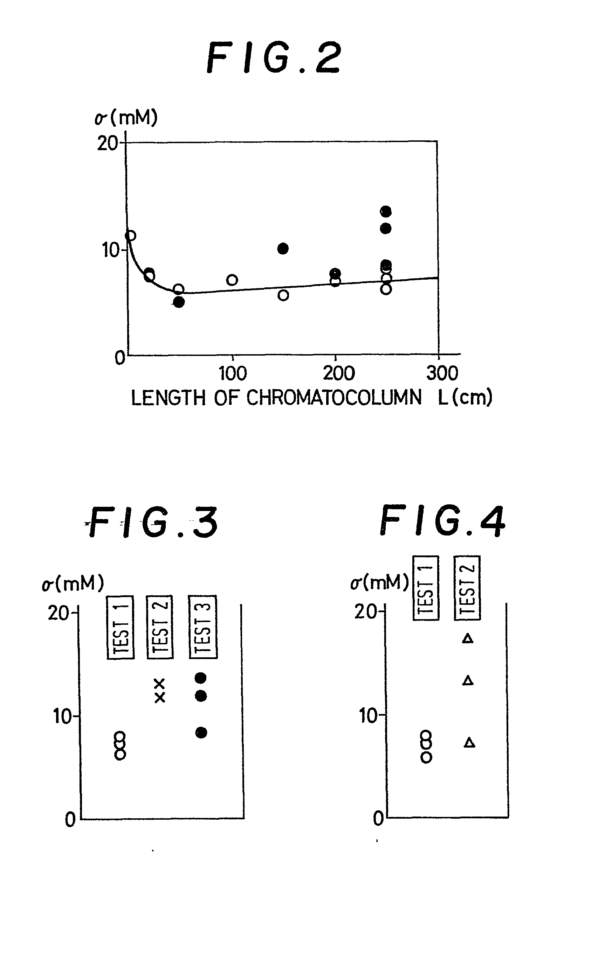

Fig. 2 is a graphic representation of the comparison between test results obtained by using a system of this invention, employing HA and lysozyme respectively as a column-packing material and a sample and providing a pump at each end of each column making up a flow path in the chromatographic experiment and those obtained in the same manner as the above test except that a single piece of pump was provided only at one end (i.e., the injection port for the flow) of the overall column length, as well as the comparison between experiments and theory;

Fig. 3 is a diagram showing experiment (test) results obtained respectively in Experiment (Test) 1 in which the effective column length was 250 cm in total and a pump was provided at each end of each of five columns making up the flow path, Experiment (Test) 2 in which three pumps were operated, and Experiment (Test) 3 in which only one pump was operated; and

Fig. 4 is a diagram illustrating experiment (test) results obtained in Experiment (Test) 1 in which columns were oriented precisely upright and Experiment (Test) 2 in which the columns were tilted over about 5 degree from their vertical positions for the sake of comparison with Experiment (Test) 1.

One embodiment of the system useful in the practice of this invention will next be described. The system is equipped with 17 columns having an inner diameter of 1 mm, 17 columns having an inner diameter of 2 mm and 17 columns having an inner diameter of 5mm. Among 17 columns of each of the above inner diameters, 10 columns have the same length, namely, are 57 cm long. The remaining 7 columns have different lengths which are shorter than the lengths of the 10 columns, namely, are 37 cm, 27 cm, 17 cm, 12 cm, 7 cm, 5 cm, and 4 cm long respectively. However, the effective length along which the packing material is packed in each of the column is somewhat shorter than the actual length of the column and may be variable to a certain extent depending on the manner of packing. For example, the optimum effective length of the packing material may be about 50 cm in a column of 57 cm long. On the other hand, the maximum effective length of the packing material in a column of 4 cm long is about 1 cm at maximum and the infinitesimal at minimum. These three groups of the columns, each group containing 17 columns (i.e., 51 columns in total), are buried in parallel in a planar holding member and are fixed in such a way that all the columns become parallel to both surfaces of the planar holding member. On the other hand, a fixing table having legs equipped with fine adjustment screws and a horizontal surface, is provided. The holding member with the columns buried therein is then mounted on a part of the fixing table. Here, the mounting of the holding member is carried out in such a way that both surfaces of the planar holding member are exactly at right angles with the horizontal surface of the fixing table and, as a result, all the 51 columns are directed in vertical directions in the holding member.  In addition, a pendulum and level are provided on one surface of the planar holding member.  The fine adjustment screws of the fixing table are then adjusted while watching the pendulum and level, so that readjustment is conducted to ensure the vertical orientation of the columns.

On the horizontal surface of the fixing table, there is mounted

a heavy multi-channel peristaltic pump system equipped with 12 pumps.

Upon conducting chromatography, one of the three groups of column diameters is selected first of all in accordance with the amount of a sample to be injected into columns.

Then, n pieces of columns are chosen from the 17 columns having the above-selected column diameter so as to achieve a desired overall column length.  These n pieces of columns are connected in series by means of small-diametered tubes having an inner diameter of 5 mm.  Small-diametered tubes of the same type as those employed above are provided respectively at both ends of the group of columns which have been connected in series, whereby forming a liquid injection port and an eluant collection port.  All or some of these (n + 1) pieces of small-diametered tubes are caused to extend through the multi-channel peristaltic pump system so that they are synchronously squeezed by its pumps to impart flowing power to the injected liquid.  In this case, portions of all or some of the small-diametered tubes, which portions are squeezed, have been replaced by special small-diametered tubes which facilitate the squeezing operations.

Fig. 1 schematically illustrates one example of this invention, in which 3 columns having the length of 57 cm and one column having the length of 27 cm, namely, four columns are chosen in total from the 17 columns having the same inner diameter, they are connected in series by means of three small-diametered tubes, one small-diametered tube is provided at each end of the group of columns connected in series, and pumps are operably and respectively applied to all the five small-diametered tubes. Namely, elongated 17 rectangles which are arranged vertically in the figure are the columns, which are respectively numbered. The above-chosen columns are the 6th, 8th, 9th and 10th columns. A scale indicating the length of each column is shown along the left end of the figure. The letter (P) indicates pumps. Out of 12 pumps equipped with the multi-channel peristaltic pump system, 5 pumps are used but the remaining 7 pumps are not used. Lines connecting columns to their corresponding pumps designate the small-diametered tubes, whereas the arrows indicate the directions of flow paths in the columns-pumps-small-diametered tubes system. Namely, letters a and b indicate an injection port for each flow and an eluate collection port respectively in the figure.

A sample dissolved in a solvent is injected through the injection port a and is, first of all, fed approximately to the top of the 10th column (more specifically, fed approximately to the top of a packing material packed in the 10th column). The sample is then conveyed by the solvent which flows in from the port a and is caused to pass through the columns in accordance with the above-described principle. Finally, the sample reaches the eluate collection port b, where it is eluted. In the course of the passage of the sample, various components of the sample are separated from each other depending on differences in their moving speeds. Where the above-described ionic concentration gradient method is applied, the ionic concentration in a solvent which flows in from the port a increases as the time goes on.

Reference will next be made to Figs. 2 and 3 so as to show, while using HA as a column-packing material by way of example, how advantageous to divide a long column into several shorter columns and to interpose a plurality of pumps respectively at both ends of the divided columns or at locations along the thus-divided columns compared with use of a single piece or unit of pump.

Fig. 2 illustrates data obtained when chromatography of lysozyme, which is formed of a single type of molecules (molecular weight: about $1.5 \times 10^4$ daltons), was conducted through HA columns by using a linear ionic concentration gradient of $4.2 \times 10^{-4}$ M/cm while changing the overall column length in various ways. The abscissa axis L indicates the overall column length, while the standard deviation of chromatographic peak of lysozyme (which is equal to one half of the half-width of the peak within the range of experimental errors) is plotted along the ordinate axis δ. The values δ

are plotted depending how much molarity widths (which are molarity widths for potassium ions present in the solvent and are each expressed in terms of a unit mM) chromatographic peaks appear over in the ionic concentration gradient. The experiment was conducted using columns having an equal inner diameter of 2 mm and having overall lengths of 2 cm, 20 cm, 50 cm, 100 cm, 150 cm, 200 cm and 250 cm respectively. The flow velocity was substantially 0.02 ml/min. In Fig. 2, circles indicate data obtained under the condition that a pump was provided at each end of each column which constituted a flow path. Namely, effective overall column lenghts of 2 cm, 20 cm and 50 cm were achieved respectively by using single pieces of columns having overall lenghts of 7 cm, 27 cm and 57 cm. A pump was operably provided to each of small-diametered tubes connected respectively to the both ends of each of the columns. The efflective overall lengths of 100 cm, 150 cm, 200 cm and 250 cm were respectively achieved by using 2 pieces, 3 pieces, 4 pieces and 5 pieces of columns having the length of 57 cm. Pumps were operably applied to all the connecting small-diametered tubes and the additional samll-diametered tubes applied respectively to both ends of the group of columns (see, Fig. 1). In Fig. 2, dots indicate data obtained when the same column or column group as that or those employed in Fig. 1 were employed and a single piece
of pump was operably provided only with the small-diametered
tube provided at the injection port (i.e., indicated by letter
a in Fig. 1) for a flow. However, it was extremely difficult
to conduct an experiment by applying only one pump to a long
column, leading to frequent occurrence of such accidents
that the pump was idled due to an excess pressure applied
thereto, the liquid was caused to leak out through the joint
between each column and its corresponding tube due to a
pressure, and/or some joints were separated. Even in some
successful examples, the small-diametered tubes were
caused to undergo abnormal swelling in many instances. Thus,
use of a single piece of pump is accompanied by a certain
degree of potential danger. When a single piece of pump is
operably provided with a small-diametered tube connecting
two columns together or with the small-diametered tube attached
to the outlet of the flow (which port is indicated by letter
b in Fig. 1), the pump was kept idling and the experiment
could not be successfully carried out. Incidentally, the
curve shown in Fig. 2 is a theoretical curve calculated from
the chromatography theory which served as a basis for the
present invention.

The following matter may be understood from Fig. 2.
The width $\sigma$ of the peak of a chromatogram barely obtained
as a successful example by using a single piece of pump is
generally broader than that available when a plurality of pumps are provided respectively at both ends of all the columns. Therefore, use of such a single piece of pump leads to low separation capacity. This tendency becomes remarkable particularly when the overall column length is great. In this case, the value σ varies considerably from one experiment to another (see the distribution of dots and that of circles at L = 250 cm). When providing a plurality of pumps respectively at both ends of all the columns, the experimental data are in good conformity with the theoretical curve and the value σ does not change significantly from one experiment to another. This conformity between the experiment and theory serves as one experimental proof for the correctness of the theory on which the present invention has been completed. Where a linear ionic concentration gradient of $4.2 \times 10^{-4}$ M/cm is used, it is readily envisaged that a minimum peak width of about 6 mM will be obtained with an overall column length of about 50 cm. This assumption conforms with the theoretical prediction. Therefore, the overall column length of 50 cm is a length which permits the best separation of a mixture of molecules having similar sizes as lysozyme and the like when a concentration gradient of $4.2 \times 10^{-4}$ M/cm is used. When a concentration gradient of $3.5 \times 10^{-5}$ M/cm which is lower by about one digit compared with the above concentration gradient is used, the optimum overall column length is about 250 cm for a mixture of molecules having sizes similar to lysozyme and the like as mentoined above. In this case, the

resulting peak width σ is about 1.5 mM. It is thus indicated from both experimental and theoretical consideration that the above peak width is about one fourth of the minimum peak width, i.e., about 6 mM obtained when a gradient of $4.2 \times 10^{-4}$

M/cm is used. From the above analysis, it is readily understood that, for increasing the separation capacity of chromatography (by reducing peak widths), it is generally required to lower the ionic concentration gradient and, at the same time, to increase the overall column length. By the way, the concentration gradient of $4.2 \times 10^{-4}$ M/cm is practically equal to the lower limit of the conventionally-employed range for concentration gradients. Especially, the upper limit to the overall lengths of columns which have conventionally been used to separate high molecules is about several tens centimeters or so [reference may be made to G. Bernardi, Methods Enzymol.,

21, 95(1971); 22, 325(1971); 27, 471(1973)]. This indicates that, although the lower limit (the reciprocal number of which is believed to teach the upper limit of separation capacity) of peak widths obtained in accordance with conventional chromatographic methods (which embrace methods pertaining to HPLC) is about 6 mM or so, use of the method of this invention permits to narrow down the peak width to one fourth of the above lower limit, i.e., to 1.5 mM. Furthermore, the separation capacity may be improved further by lowering the ionic concentration gradient further and at the same time, by making the overall column length still longer. Although the matter becomes more complex in the case of chromatography of a mixture of molecules having various sizes, it is still feasible to theoretically predict optimum experimental conditions. The above-described general method, which permits to increase the chromatographic separation capacity in the above-mentioned manner, has been derived from the extremely general chromatography principle which was discovered along with the present invention. It is a breakthrough against the limitation to separation capacity, to which limitation the methods developed in recent years in the field of HPLC have encountered. At the same time, the method of this invention can be applied equally to various types of chromatography owing to the generality of the principle on which it is based.

Fig. 3 illustrates experimental data emphasizing further the importance of providing pumps respectively at both ends of all columns making up a flow path particularly where the effective overall column length is long (i.e., where L = 250 cm). Namely, the data of Experiment (Test) 1 and those of Experiment (Test) 3 in Fig. 3 are exactly the data at L = 250 cm in Fig. 2. The data of Experiment (test) 2 were obtained by using 5 columns each having an overall legth of 57 cm (effective overall lenght: 50 cm) similar to the experiment pertaining to Fig. 2 but by providing two of three pumps respectively to both end small-diametered tubes of the column system connected in series and the remaining one pump only with the second connecting small-diametered tube when counted from the injection port of the flow. The value $\sigma$ obtained in Experiment (Test) 2 is large, similar to the value obtained with use of only one pump, compared with that obtained by providing pumps respectively at both ends of all pumps.

Fig. 4 illustrates experimental data showing the importance of providing columns precisely in vertical positions. The data of Experiment (Test) 1 are exactly the same as the circles at L = 250 cm in Fig. 2. Namely, all the columns were directed precisely upright in Experiment (Test) 1. Experiment (Test) 2, was conducted under the same experimental conditions as Experiment (Test) 1 except that the columns were offset by about 5 degree from their upright positions. In Experiment (Test) 2, the distribution of the packing material was slightly different from the average distribution in each cross-section of each column and the variation in flow velocity in each cross-section of each column was generally believed to have increased. The common tendency that the width of a sample band in each column becomes wider as the inclination of the column increases was directly observed by using as the sample cytochrome C which is a chromoprotein.

Finally, it is understood how important the synchronized operation of the plurality of pumps is, if one conducts an experiment by making the thicknesses of small-diametered tubes to be squeezed by the multi-channel peristaltic pump system non-uniform. In such an experiment, the action of the pump at each small-diametered tube in the column-pump-small-diametered tube system is not synchronized, thereby making the flow velocity different from one column to another. As a result, the liquid may be caused to leak out through the joints between the columns and their corresponding small-diametered tubes or the joints may be disconnected.

C L A I M S

1.  A chromatographic method, which comprises
interposing at least two pumps respectively at each
   end  of one chromatographic column selected from a
plurality of chromatographic columns, or at each end  of
a group of at least two chromatographic columns selected
from the plurality of chromatographic columns and connected
to each other,and/or at one or more locations
along the thus-connected at least two chromatographic
columns, and operating these pumps.

2.  A chromatographic method as claimed in Claim 1,
wherein hydroxyapatite is used as a column-packing material
said plurality of chromatographic columns.

3.  A chromatographic system comprising:
   a plurality of chromatographic columns; and
   at least two pumps interposed operably and respectively
at each end  of one chromatographic column selected from
the plurality of chromatographic columns, or at each end
of a group of at least two chromatographic columns selected
from the plurality of chromatographic columns and connected
to each other,and/or at one or more locations
along the thus-connected at least two chromatographic columns.

4.  A chromatographic system as claimed in Claim 3,
wherein said pumps are provided at each end of each of said group of at least two chromatographic columns.

5. A chromatographic system as claimed in Claim 3, wherein said group of at least two chromatographic columns is formed by connecting said at least two chromatographic columns to each other by means of small-diametered tubes, the ratio of the cross-sectional area of said chromatographic tubes to the cross-sectional area of said columns (the cross-sectional area of said tube/the cross-sectional area of said column) ranging from $1 \times 10^{-4}$ to 1, and wherein additional small-diametered tubes which are substantially the same as said small-diametered tubes are provided respectively at each end of said group of at least two chromatographic columns, and said pumps are operably and respectively provided with these small-diametered tubes.

6. A chromatographic system as claimed in Claim 3, wherein said pumps are synchronously operable

7. A chromatographic system as claimed in Claim 3, wherein said plurality of chromatographic columns consists of chromatographic columns having different lengths, which are selectively connectable as desired whereby the overall column length of the chromatographic system can be changed at will.

8. A chromatographic system as claimed in Claim 7, wherein said chromatographic columns having different lengths are arranged vertically.

FIG.1

0122733

# FIG.2

σ(mM)

LENGTH OF CHROMATOCOLUMN L(cm)

# FIG.3

σ(mM)

TEST 1   TEST 2   TEST 3

# FIG.4

σ(mM)

TEST 1   TEST 2